# EUROPÄISCHE PATENTSCHRIFT

(11) **EP 0 383 872 B1**
(45) Veröffentlichungstag und Bekanntmachung des Hinweises auf die Patenterteilung: **15.02.1995**
(21) Anmeldenummer: 89908375.2
(22) Anmeldetag: 31.07.1989
(51) Int. Cl.: C04B 18/16, C04B 28/02, B28B 13/02

(54) **BAUMATERIAL**
BUILDING MATERIAL
MATERIAU DE CONSTRUCTION

(30) Priorität: 11.08.1988 CH 3040/88
(43) Veröffentlichungstag der Anmeldung: 29.08.1990
(73) Patentinhaber: BUCHEL, Arnold, CH-8610 Uster (CH)
(72) Erfinder: BUCHEL, Arnold, CH-8610 Uster (CH)
(74) Vertreter: Breiter, Heinz
(86) Internationale Anmeldenummer: CH8900142
(87) Internationale Veröffentlichungsnummer: WO9001468

(56) Entgegenhaltungen:
- DE-A- 3 608 180
- FR-A- 806 648
- FR-A- 915 081
- FR-A- 948 483
- FR-A- 1 115 932
- FR-A- 2 117 579
- A.E.Dudd: "Dictionary of Cermaics", 20 April 1965 George Newness Ltd, (London, GB), pages 36, 37 see page 36, lines 24-32

## Beschreibung

Die Erfindung bezieht sich auf ein Baumaterial nach dem Oberbegriff von Patentanspruch 1 und auf ein Verfahren zur Herstellung von Platten, Plättchen und/oder Putzen, welche zur Aufrechterhaltung der Atmungsfähigkeit eine poröse Struktur aufweisen.

Rohe Böden, Wände und Decken, aber auch Pfeiler, Säulen, Bögen und Stürze werden meist mit Plättchen und/oder Putzen versehen. Dies erfolgt insbesondere aus drei Gründen:
- Dem Bauwerk soll Schutz gegen Verwitterung, Wärme und Kälte und sonstige Beschädigungen verliehen werden.
- Das im rohen Zustand oft unansehnliche Bauwerk soll verschönert werden.
- Unebenheiten sollen ausgeglichen werden.

Dem Fachmann sind Beläge, Verkleidungen und/oder Putze der verschiedensten Art bekannt, beispielsweise das Verlegen von Naturstein- oder künstlichen Platten bzw. Plättchen, das Aufziehen eines Putzes, die Holzverschalung usw. Je nach den speziellen Bedingungen wird die jeweils günstigste Art gewählt.

Neben der Qualität, dem Aussehen und dem Preis wird heute zunehmend darauf geachtet, natürliche Baumaterialien zu verwenden.

So beschreibt die CH,A5,659 102 ein Verfahren zum Verlegen von aus Mauerziegeln geschnittenen Platten auf oder an eine mit einer Haftschicht verbundene Unterlage. Diese Platten können durch entsprechende Behandlung bezüglich des farblichen Effekts in einem weiten Spektrum beeinflusst werden.

Weiter haben aus Mauerziegeln geschnittene Platten den Vorteil, dass sie auch nach der abschliessenden Imprägnierung mit einem wasserabweisenden Zusatz porendurchlässig sind, die Atmungsfähigkeit der Platten wird also erhalten. Der Feuchtigkeitshaushalt in Innenräumen, insbesondere Nassräumen, ist mit porendurchlässigem Material optimal gewährleistet.

Trotz erheblicher Vorteile weisen die Platten gemäss der CH,A5,659 102 auch Nachteile auf:
- Beim Schneiden der Mauerziegel fallen erhebliche Abfallmengen von feinkörnigem Material und, je nach den erforderlichen Massen, auch stückigem Gut an.
- Als Ausgangsmaterial sind nur fabrikneue Mauerziegel verwendbar.

Die FR,A,915 081 beschreibt die Zugabe von gebrochenem oder gemahlenem keramischem Material, wie Ton, zu feuchtem Mörtel oder Beton. Der zugegebene Ton wird körnig hergestellt oder Tonblöcke werden gebrochen. Weiter kann der körnige Ton aus Trümmerschutt oder gebrauchten Mauersteinen bzw. Ziegeln hergestellt werden.

Aus der FR,A,1115932 ist bekannt, einen porösen Beton herzustellen, sowohl auf dem Bauplatz als auch vorfabrizierte Blöcke. Zur Herstellung dieses sog. "Touvlo-Betons" wird feingemahlene Schamotte, Ziegelmehl, Kies und Zement verwendet. Es wird ausdrücklich betont, dass Steine und Sand ausgeschlossen sind. Verschiedene Farben können hergestellt werden, indem entsprechende Farbpulver zugemischt werden. Auch die Zugabe von Holzsägemehl oder granuliertem Koks wird erwähnt.

Der Erfinder hat sich die Aufgabe gestellt, ein Baumaterial für und ein Verfahren zur Herstellung von Platten, Plättchen und/oder Putzen zu schaffen, welche eine positive Umweltbilanz aufweisen und den Einsatz von weitgehend natürlichen Ausgangsmaterialien erlauben, aber dennoch preisgünstig und leicht zu handhaben sind.

In bezug auf das Baumaterial wird die Aufgabe erfindungsgemäss nach Patentanspruch 1 gelöst.

Im Gegensatz zu den beiden obenstehenden französischen Patentschriften benutzt die vorliegende Erfindung kein Grundmaterial aus Mörtel oder Beton, sondern aus gemahlenen, bei niedriger Temperatur gebrannten Tonziegeln. Abgesehen von der fehlenden biologischen Basis, des Zumischung von organischem Material der Teilchen- und/oder Faserform, vermögen die beiden französischen Patentschriften keinen Hinweis auf die Herstellung von Platten, Plättchen und/oder Putzen einer geringen Dicke zu geben. Vielmehr weisen sie auf die Herstellung von grossformatigen Blöcken oder Platten hin, welche wegen ihrem Grobanteil mehrere Zentimeter dick sein müssen.

Das bei niedriger Temperatur gebrannte Grundmaterial hat eine poröse Struktur. Dieses Grundmaterial hat den Ziegelbrand bereits hinter sich. Die Platten und Plättchen, bei Putzen ist dies selbstverständlich, werden ohne jeglichen Brand, nur durch Abbinden, hergestellt. Das Grundmaterial fällt als z.B. Schleif-, Schneide- und/oder Sägeabfall von Tonziegeln an. Beim Schneiden von Platten gemäss der CH,A5,659 102 beispielsweise fällt Schneidemehl in grosser Menge als dickflüssige Schlämme an, aus welcher nach dem Stehenlassen das überschüssige Wasser abgezogen werden kann.

Die auf einer Baustelle und in gewerblichen Verfahren häufig anfallenden Resten von Mauer- und Dachziegeln können mit verhältnismässig geringem Energie- und Arbeitsaufwand auf die gewünschte Korngrösse gemahlen, insbesondere mit einer Kugelmühle, und vor dem Gebrauch als Grundmaterial mit Wasser aufgeschlämmt werden, falls ein trockenes Mahlverfahren eingesetzt wird.

Das Grundmaterial kann auch aus bei weniger als 1000°C gebrannten Abbruch-Tonziegeln hergestellt werden, ohne dass das Fugenmaterial entfernt werden muss. So können beispielsweise alte Hochkamine einer ökologisch sinnvollen und ökonomisch interessanten Verwendung zugeführt werden.

Die Korngrösse des Grundmaterials liegt bei höchstens etwa 4 mm, Der für die vorliegende Erfindung besonders bedeutungsvolle staub- bis feinkörnige Anteil liegt bei mindestens 50 Gew.-%, bei einer Korngrösse bis etwa 0,5 mm, vorzugsweise bis 0,2 mm.

Die eingesetzten maximalen Korngrossen hängen von der Verwendung ab. Bei extrem dünnen Plättchen werden aus mechanischen Gründen weniger grobe Körner verwendet. Ein Putz hat in der Regel nur Korngrössen bis 0,5 mm.

Als hydraulisches Bindemittel wird in erster Linie Zement, insbesondere weisser Zement, eingesetzt. Dieses mit Wasser angerührte Bindemittel erhärtet selbständig und ist nach dem Abbinden wasserbeständig. Derart kann ein aus Abfallstoffen gewonnenes, tonhaltiges Material ohne erneuten Brand gebunden werden. Selbstverständlich können die als Grundmaterial eingesetzten Tone verschiedener Ziegel in jedem beliebigen Verhältnis gemischt und mit einem hydraulischen Bindemittel versehen werden.

Weisser Zement ist nicht nur qualitativ hochwertiger, er wird auch aus ökologischen Gründen vorgezogen. Ueberdies entsteht bei Verwendung von weissem Zement ein Baumaterial hellerer Farbe.

Beim Auftragen der gemischten, feuchten Masse als Putz ist auch Kalk als Bindemittel geeignet.

Wird die Mischung von Grundmaterial und hydraulischem Bindemittel zur Herstellung von Plättchen oder dgl. in eine Form gegeben, kann sie neben den erwähnten Komponenten auch einen kalkhaltigen Natursand einer geeigneten Lagerstätte enthalten, insbesondere mit einer Korngrösse von 0,1 - 3 mm. Ein Volumenverhältnis Grundmaterial : Sand von 25 bis 5 : 1 hat sich in der Praxis als zweckmässig erwiesen. Die Zumischung des kalkhaltigen Natursands ermöglicht die Herstellung von harten, abriebfesten Platten bzw. Plättchen. Mit dem Zusatz von kalkhaltigem Natursand kann auch der notwendige Anteil von hydraulischem Bindemittel gesenkt werden. Bei einer geschliffenen Oberfläche wirken die Natursandteile dekorativ. Schliesslich, dies ist ein wesentlicher Faktor, erhöht das eingemischte grobkörnigere Material die Porosität, was sich auf die Atmungsfähigkeit und die Isolationseigenschaften positiv auswirkt, das Plättchen fühlt sich warm an.

Falls die Wandstärke von mit der erfindungsgemässen Masse hergestellten Plättchen ohne oder mit nur unwesentlichem Festigkeitsverlust gering sein soll, kann die feuchte Masse mit oder auf Verstärkungsfasern in eine/r Form gegossen werden, wo die Masse abbindet. Dabei werden eine Versteifung bewirkende Fasern auf organischer Basis vorgezogen, beispielsweise Baumwollabfälle oder Flachsfasern, welche gleichzeitig eine Gewichtsersparnis bringen.

Insbesondere aus dekorativen Gründen kann schliesslich ein körniges Material mit einer andern Farbe als das Grundmaterial, vorzugsweise Ziegelschrott mit einer Korngrösse von 0,1 - 3 mm, beigemischt werden. Ein Volumenverhältnis Grundmaterial : andersfarbiges Material von 5 bis 1,25 : 1 hat sich als zweckmässig erwiesen. Diese Mischung wird bevorzugt nur für den Oberflächenbereich von Platten oder Plättchen eingesetzt.

Durch Schleifen können Strukturen der Plättchen herausgearbeitet werden, welche neben der Basisfarbe durch das Grundmaterial von den oben erwähnten, eingemischten Natursandkörnern, den Ziegelschrott und das Bearbeitungsverfahren besimmt sind.

Als gröberes Material eingegebener Ziegelschrott erhöht weiter die Porosität des Baumaterials.

Das erfindungsgemäss zugegebene organische Material in Teilchen- oder Faserform quillt bei Wasseraufnahme auf und schrumpft beim Austrocknen. Das Aushärten der Masse und das Austrocknen der aufgequillten Teilchen erfolgt etwa gleichzeitig, was eine poröse Struktur zur Folge hat.

Als Quellmaterial eignet sich in erster Linie Holz in Form von Sägemehl, Schleifstaub oder kleinformatigen Spänen. Die Teilchengrösse überschreitet vorzugsweise 3 mm nicht. Ein Volumenverhältnis Grundmaterial : Holz von 15 bis 10 : 1 hat sich als zweckmässig erwiesen.

Biologische Fasern können sich ebenfalls als Quellmaterial eignen, insbesondere Fasern, wie Baumwolle, und/oder Papierschnitzel. Baumwolle erfüllt eine Doppelfunktion, Verstärkung und Schaffung von zusätzlicher Porosität. Ein Volumenverhältnis Grundmaterial : Quellmaterial von 5 bis 3 : 1 hat sich als zweckmässig erwiesen.

Das Grundmaterial aus gebrannten Tonziegeln und das hydraulische Bindemittel, sind bevorzugt etwa in einem Volumenverhältnis 3 : 1 gemischt. Wird noch kalkhaltiger Natursand zugegeben, so liegt das Mischungsverhältnis Grundmaterial : hydraulisches Bindemittel : Natursand bevorzugt etwa bei 3 : 1 : 1.

In bezug auf das Verfahren wird die Aufgabe erfindungsgemäss dadurch gelöst, dass das fertig zubereitete Gemisch mit Wasser aufgeschlämmt, die feuchte Masse schichtweise in eine Form gegeben oder schichtförmig auf eine Unterlage aufgetragen und dann durch Austrocknen abgebunden wird.

Das Verfahren zur Herstellung von Platten oder Plättchen erfolgt vorzugsweise zweistufig. Die Form wird vorerst mit der feuchten Masse gefüllt, und nach einer Wartezeit von 15 bis 60 Minuten, vorzugsweise etwa nach 30 Minuten, wird feuchte Masse nachgefüllt, bis die Form wieder gefüllt ist. Während der Wartezeit entweicht Luft, sodass der Spiegel der feuchten Masse etwa 1 bis 2 mm absinkt.

Die vorerst in die Form gegebene Masse weist alle Körnungen auf. Die nach der Wartezeit eingegebene Masse kann ohne Grobanteil oberhalb 0,5 mm Korngrösse sein.

Weiter ist von wesentlicher Bedeutung, dass nach der Wartezeit eine andere feuchte Masse nachgefüllt werden kann, welche ein körniges Material mit einer anderen Farbe als das Grundmaterial enthält, beispielsweise Ziegelschrott einer Korngrösse von 0,1 - 3 mm. Damit kann der Grundkörper einer Platte oder eines Plättchens mit verschiedenen, ca. 1 - 2 mm dicken Deckschichten hergestellt werden.

Eine allfällig in der 1 bis 2 mm dicken, nach der Wartezeit aufgetragenen Schicht vorhandene Körnung, welche grösser ist als diese Schicht, kann in die noch weiche Unterlage eingedrückt werden. Es ist sehr wesentlich und erfordert das Geschick des Fachmanns, dass die Wartezeit richtig angesetzt wird. Einerseits sollte die Luft praktisch vollständig entwichen sein, andererseits darf die vor der Wartezeit eingefüllte feuchte Masse noch nicht so angetrocknet sein, dass eine das Abbinden behindernde Phasengrenze entsteht.

Die Wasserzugabe zur Herstellung der feuchten Masse erfolgt nach den beruflichen Erfahrungen des Fachmanns.

Die Oberflächeneigenschaften der erfindungsgemäss hergestellten Erzeugnisse entsprechen im wesentlichen denjenigen von bei weniger als 1000° C gebrannten Tonziegeln. Die poröse Struktur erlaubt die Aufrechterhaltung der Atmungsfähigkeit. Wegen der guten Isolation fühlt sich das Material warm an.

Das hydraulische Bindemittel, insbesondere weisser Zement, beeinträchtigt die vorteilhaften Eigenschaften nicht. Dagegen ist die Oberfläche besser gegen Verschmutzungen aller Art geschützt, seien es beispielsweise Oele, Fette, Verätzungen, Wein, Milch oder Zitronensaft. Die Oberfläche bleibt während mehrerer Stunden unbeeinträchtigt.

Die nach dem Eingiessen in eine Form durch Austrocknen abgebundene feuchte Masse ergibt beispielsweise Platten bzw. Plättchen für Böden, Wände, Pfeiler, Säulen, Bögen, Stürze, Kochherde und Cheminés. Die Plättchen können flach, rund, abgewinkelt oder abgerundet ausgebildet sein, in beliebigen Dimensionen.

Die abbindenden Platten oder Plättchen können vor dem vollständigen Austrocknen angeschliffen werden. Die vollständig ausgetrockneten Plättchen können mit einem Wachs, vorzugsweise einem biologischen Wachs, behandelt werden. Dank des Bindemittels, insbesondere des weissen Zements, saugen die Platten oder Plättchen viel weniger Wachs auf. Die Atmungsfähigkeit wird durch die Wachsbehandlung nicht beeinträchtigt. Ebensowenig werden die mit speziellen Schleifverfahren herausgeholten Strukturen durch den Wachs beeinträchtigt.

Auf eine Unterlage schichtförmig aufgetragene feuchte Masse ergibt isolierende, schalldämmende und/oder wasserabweisende Mauer- und Deckenputze, auch als Riegelausfachungen.

Sowohl Platten und Plättchen als auch Mauer- und Deckenputze eignen sich wegen ihrer porösen Struktur vorzüglich zur Anwendung in Feuchträumen. Wasser, sei es in flüssiger oder in Dampfform, wird in kurzer Zeit aufgesogen und damit ein Beschlagen von Gegenständen, wie beispielsweise Spiegeln, verhindert. Das aufgenommene Wasser wird bei geringerem Feuchtigkeitsgehalt der Atmosphäre wieder abgegeben.

Schliesslich kann feuchte Masse, welche vorzugsweise Natursand enthält, als dünne Schicht auf übliche, begehbare und befahrbare Betonplatten oder -verbundsteine aufgetragen werden, wodurch auf äusserst kostengünstige Weise ein dekorativer Effekt erzielt wird.

Die erfindungsgemäss hergestellten Platten, Plättchen und/oder Putze weisen wesentliche weitere Vorteile auf:
- Mit geringem Aufwand können hochwertige Abfallstoffe, nämlich bei weniger als 1000°C gebrannte Tonziegel, als Grundmaterial verwertet werden. Dies wirkt sich nicht nur in den Herstellungskosten aus, sondern entlastet auch Gruben.
- Platten bzw. Plättchen haben eine dosierbare Härte, diese wird nicht durch ggf. auf die Oberfläche aufgetragenen Wachs beeinflusst. Sie können ohne Brennverfahren hergestellt werden.
- Holzbalken, -bretter und dgl. können an Ort und Stelle mit der feuchten Masse umgossen werden und faulen nicht.

## Patentansprüche

1. Baumaterial für Platten, Plättchen und/oder Putze aus einem mit Wasser aufschlämmbaren Gemisch eines Grundmaterials einer Korngrösse von höchstens etwa 4 mm aus zerkleinerten Tonziegeln und eines hydraulischen Bindemittels, dadurch gekennzeichnet, dass das Grundmaterial aus bei weniger als 1000° C gebrannten, gemahlenen Tonziegeln besteht, einen bei wenigstens 50 Gew.-% liegenden staub- bis feinkörnigen Anteil einer Korngrösse bis etwa 0,5 mm hat, und ein durch Wasseraufnahme aufquellendes, beim Austrocknen schrumpfendes organisches Material in Teilchen- und/oder Faserform zugemischt ist.

2. Baumaterial nach Anspruch 1, dadurch gekennzeichnet, dass das Grundmaterial einen bei wenigstens 50 Gew.-% liegenden staub- bis feinkörnigen Anteil einer Korngrösse bis 0,2 mm hat.

3. Baumaterial nach Anspruch 1 oder 2, dadurch gekennzeichnet, dass ein kalkhaltiger Natursand, vorzugsweise mit einer Körnung von 0,1 bis 4 mm zugemischt ist, vorzugsweise mit einem Volumenverhältnis von Grundmaterial : Sand von 25 bis 5 : 1.

4. Baumaterial nach einem der Ansprüche 1 bis 3, dadurch gekennzeichnet, dass ein körniges Material mit einer andern Farbe als das Grundmaterial, vorzugsweise Ziegelschrott einer Korngrösse von 0,1 bis 3 mm, zugemischt ist, vorzugsweise in einem Volumenverhältnis Grundmaterial : andersfarbiges Material von 5 bis 1,25 : 1.

5. Baumaterial nach einem der Ansprüche 1 bis 4, dadurch gekennzeichnet, dass das hydraulische Bindemittel aus weissem Zement besteht.

6. Baumaterial nach Anspruch 5, dadurch gekennzeichnet, dass das organische Material aus Holzsägemehl, -schleifstaub oder -spänen mit einer Teilchengrösse bis etwa 3 mm besteht, vorzugsweise in einem Volumenverhältnis Grundmaterial : Holz von 15 bis 10 : 1.

7. Baumaterial nach Anspruch 5, dadurch gekennzeichnet, dass das organische Material aus biologischen Fasern, wie Baumwolle, und/oder Papierschnitzeln besteht, vorzugsweise in einem Volumenverhältnis Grundmaterial : organischem Mittel von 5 bis 3 : 1.

8. Verfahren zur Herstellung von Platten, Plättchen und/oder Putzen, welche zur Aufrechterhaltung der Atmungsfähigkeit eine poröse Struktur aufweisen, unter Verwendung des Baumaterials nach einem der Ansprüche 1 bis 7,
dadurch gekennzeichnet, dass
das fertig zubereitete Gemisch mit Wasser aufgeschlämmt, die feuchte Masse schichtweise in eine Form gegeben oder schichtförmig auf eine Unterlage aufgetragen und dann durch Austrocknen abgebunden wird.

9. Verfahren nach Anspruch 8 zur Herstellung von Platten oder Plättchen, dadurch gekennzeichnet, dass die Form mit der feuchten Masse gefüllt und nach einer Wartezeit von 15 bis 60 Minuten, vorzugsweise etwa nach 30 Minuten, feuchte Masse nachgefüllt wird.

10. Verfahren nach Anspruch 9, dadurch gekennzeichnet, dass nach der Wartezeit eine zweite feuchte Masse, die ein körniges Material mit einer andern Farbe als das Grundmaterial, vorzugsweise Ziegelschrott einer Korngrösse von 0,1 - 3 mm, enthält, nachgefüllt wird.

## Claims

1. Building material for panels, laminae and/or plasters comprising a slurry with water of a basic material of at most about 4 mm grain size crushed clay bricks and a hydraulic binding agent, characterized in that the basic material consists of crushed clay bricks fired at less than 1000°C has a powdery to finegrained portion of at least about 50 weight % having a grain size up to about 0,5 mm and an organic material in particle and/or fiber form is admixed, which organic material swells due to water absorption and shrinks during drying.

2. Builing material according to Claim 1, characterized in that the grain size of the basic material has at least 50% by weight of powdery to fine-grained portion having a grain size up to 0.2 mm.

3. Building material according to Claim 1 or 2, characterized in that a calcereous natural sand, preferably having a grain size of 0.1 to 4 mm, is admixed, preferably with a volume ratio of basic material:sand of 25 to 5:1.

4. Building material according to one of Claims 1 to 3, characterized in that a granular material of a color different from the basic material, preferably brick waste of a grain size of 0.1 to 3 mm is admixed, preferably in a volume ratio of basic material:different-colored material of 5 to 1.25:1.

5. Building material according to one of Claims 1 to 4, characterized in that the hydraulic binding agent consists of white cement.

6. Building material according to Claim 5, characterized in that the organic material consists of wood sawdust, wood abrasive dust or wood chips having a particle size of up to about 3 mm, preferably in a volume ratio of basic material:wood of 15 to 10:1.

7. Building material according to Claim 5, characterized in that the organic material consists of biological fibers such as cotton and/or paper shavings, preferably in a volume ratio of basic material:organic agent of 5 to 3:1.

8. Process of manufacturing panels, laminae and/or plasters which have a porous structure to maintain the breathing capacity, with use of the building material as claimed in one of Claims 1 to 7, characterized in that the ready-prepared mixture is made into a slurry with water, and the moist compound is put in layers into a mold or applied in a layered shape to a backing and then set by drying.

9. Process according to Claim 8 for producing panels or laminae, characterized in that the mold is filled with moist compound, and after a waiting time of 15 to 60 minutes, preferably after about 30 minutes, the mold is topped up with moist compound.

10. Process according to Claim 9, characterized in that, after the waiting time, the mold is topped up with a second moist compound which contains a granular material of a color different from the basic material, preferably brick waste of a grain size of 0.1 to 3 mm.

## Revendications

1. Matériau de construction pour des plaques, des plaquettes et/ou des crépis, constitué d'un mélange, susceptible d'être mis en suspension avec de l'eau, d'un matériau de base d'une grosseur de grain d'au plus à peu près 4 mm, de briques ou de tuiles d'argile concassées et d'un liant hydraulique, caractérisé en ce que le matériau de base consiste en des briques ou des tuiles d'argile broyées, cuites à moins de 1000 °C, a une quote-part incluant au moins 50 % en poids, de matériau allant de la poussière à une fine granulation, d'une grosseur de grain jusqu'à à peu près 0,5 mm, et est mélangé avec un matériau organique, gonflant par réception d'eau, se contractant lors du séchage, sous forme de particules et/ou de fibres.

2. Matériau de construction selon la revendication 1, caractérisé en ce que le matériau de base a une quote-part, incluant au moins 50 % en poids, de matériau allant de la poussière à une fine granulation, d'une grosseur de grain jusqu'à 0,2 mm.

3. Matériau de construction selon la revendication 1 ou la revendication 2, caractérisé en ce qu'un sable naturel à teneur en calcaire, de façon préférée ayant une granulation de 0,1 à 4 mm, est adjoint par mélange, de façon préférée avec un rapport de volumes de matériau de base : sable de 25 à 5 : 1.

4. Matériau de construction selon une des revendications 1 à 3, caractérisé en ce qu'un matériau granuleux, ayant une autre couleur que le matériau de base, de façon préférée des déchets de brique ou de tuile d'une grosseur de grain de 0,1 à 3 mm, est adjoint par mélange, de façon préférée dans un rapport de volumes de matériau de base : matériau d'autre couleur de 5 à 1,25 : 1.

5. Matériau de construction selon une des revendications 1 à 4, caractérisé en ce que le liant hydraulique consiste en du ciment blanc.

6. Matériau de construction selon la revendication 5, caractérisé en ce que le matériau organique consiste en de la sciure de scie à bois, de la poussière de ponçage de bois ou des copeaux de bois ayant une grosseur de particule jusqu'à à peu près 3 mm, de façon préférée dans un rapport de volumes matériau de base : bois de 15 à 10 :1.

7. Matériau de construction selon la revendication 5, caractérisé en ce que le matériau organique consiste en des fibres biologiques, telles que du coton, et/ou des rognures de papier, de façon préférée dans un rapport de volumes matériau de base : milieu organique de 5 à 3 : 1.

8. Procédé pour la réalisation de plaques, plaquettes et/ou crépis, lesquels, pour le maintien de la capacité de respiration, présentent une structure poreuse, avec emploi du matériau de construction selon une des revendications 1 à 7,
caractérisé en ce que,
le mélange préparé dans son état final est mis en suspension avec de l'eau, la masse humide est amenée en couche dans un moule, ou est appliquée sous forme de couche sur un support, et, ensuite, est amenée en prise par séchage.

9. Procédé selon la revendication 8 pour la réalisation de plaques ou de plaquettes, caractérisé en ce que le moule est rempli avec la masse humide, et, après un temps d'attente de 15 à 60 minutes, est rempli à nouveau avec de la masse humide.

10. Procédé selon la revendication 9, caractérisé en ce qu'après le temps d'attente, une deuxième masse humide, qui contient un matériau granuleux ayant une autre couleur que le matériau de base, de façon préférée des déchets de brique ou de tuile d'une grosseur de grain de 0,1 à 3 mm, assure à nouveau le plein.
